# EUROPÄISCHE PATENTSCHRIFT

(11) **EP 2 982 810 B1**
(45) Veröffentlichungstag und Bekanntmachung des Hinweises auf die Patenterteilung: **07.03.2018**
(21) Anmeldenummer: 15002198.8
(22) Anmeldetag: 24.07.2015
(51) Int. Cl.: E04D 11/00, E04D 13/04

(54) **WASSERABFLUSSSYSTEM MIT AUTOMATISCH REGELBARER ABFLUSSMENGE**
WATER DRAIN SYSTEM WITH AUTOMATICALLY ADJUSTABLE DISCHARGE FLOWS
SYSTEME D'EVACUATION D'EAU A REGLAGE AUTOMATIQUE DU DEBIT

(30) Priorität: 08.08.2014 DE 102014011832
(43) Veröffentlichungstag der Anmeldung: 10.02.2016
(73) Patentinhaber: Optigrün international AG, 72505 Krauchenwies-Göggingen (DE)
(72) Erfinder: Steltenpöhl, Rob G. A., 1602BA Enkhuizen (NL); Vlijm, Henk G., 3881TZ Putten (NL)
(74) Vertreter: Tomerius, Isabel

(56) Entgegenhaltungen:
- EP-A1- 0 626 485
- EP-A1- 1 607 542
- EP-A1- 2 050 891
- DE-C1- 19 852 561
- DE-U1- 9 401 805
- FR-A1- 2 522 771
- JP-A- 2012 040 504

## Beschreibung

Die Erfindung betrifft ein Wasserabflusssystem für Dachflächen, und besonders ein solches System, welches verhindert, dass Regenwasser, welches auf einer Fläche niedergeht, in im wesentlichen unverminderter Menge und ohne zeitliche Verzögerung abfließt.

Die Versiegelung des Bodens führt insbesondere in Städten dazu, dass die bei starken Regenfällen niedergehende Wassermenge von der Kanalisation nicht bewältigt werden kann. Als Folge hiervon kommt es zu Überschwemmungen von Straßen, Bürgersteigen usw. Herkömmliche Gebäudebedachungen leiten das auf ihnen niedergegangene Regenwasser praktisch vollständig und ohne zeitliche Verzögerung vom Dach wieder ab. Dagegen erfolgt die Abgabe des Regenwassers von begrünten Dächern mit zeitlicher Verzögerung. Der Grund hierfür liegt darin, dass die Pflanzen und das Substrat, auf welchem die Pflanzen angepflanzt sind, Regenwasser speichern und nur verzögert abgeben. Zudem ist die Menge des abgegebenen Wassers geringer, da ein Teil der Niederschlagsmenge über die Bodenfläche verdunstet und ein anderer Teil von den Pflanzen verbraucht wird.

Gegenüber herkömmlichen, nicht bepflanzten Dächern weisen begrünte Dächer also den Vorteil auf, dass der auf ihnen niedergegangene Niederschlag in reduzierter Menge und mit zeitlicher Verzögerung an die Kanalisation abgegeben wird. Der Aufbau des Pflanzsubstrats für die Dachbegrünung unterscheidet sich je nach Art der Pflanzen, welche auf dem Dach angepflanzt werden sollen. Es sind sowohl ein- als auch mehrschichtige Aufbauten bekannt. Üblicherweise gilt, dass die Anzahl der Schichten zunimmt, je anspruchsvoller die Pflanzen werden. Sollen beispielsweise Stauden, Sträucher oder Bäume gepflanzt werden, sind üblicherweise mehrschichtige Aufbauten erforderlich, und um die Pflanzen hinreichend mit Wasser zu versorgen, ist eine Anstaubewässerung notwendig. Ein Schichtaufbau für eine derartige Intensivbegrünung umfasst also ein Wasserreservoir, aus dem die Pflanzen kontinuierlich mit Feuchtigkeit versorgt werden können (vgl. DE 9401805 U1).

Das Wasserreservoir ermöglicht die Aufnahme und den Rückhalt auch größerer Mengen Wasser. Um jedoch sicherzustellen, dass die von den Behörden vorgegebenen Abflussbeiwerte, dass heißt, die zulässige Ablaufmenge Wasser pro Zeit, auch bei starken Niederschlägen eingehalten wird, ist eine genaue Einstellung des Abflusses vom Dach über die Zeit erforderlich. In der DE 19852561 C1 der Anmelderin wird hierfür eine Lösung vorgeschlagen. Das dort beschriebene Wasserabflusssystem weist in einen Dachabfluss einmündende konzentrische Rohre auf, die so gegeneinander eingestellt werden können, dass eine Begrenzung der Menge des ablaufenden Wassers erreicht wird. Die Durchflussmenge wird dabei unter anderem in Abhängigkeit von der Größe zu entwässernden Fläche, der Art des Dachaufbaus und der zu erwartenden Niederschlagsmenge fest vorgegeben.

In letzter Zeit hat sich jedoch aufgrund des Klimawandels und der zunehmend verdichteten Bebauung die Situation verschlechtert, und die Überlastung der Kanalisationen und Gewässer hat sich verschärft. In der Folge kommt es mit zunehmender Häufigkeit zu Überflutungen und Hochwassern. Städte und Kommunen erhöhen zunehmend die Anforderungen an den Gebäudebesitzer, insbesondere bei Neubauten, einen Beitrag zur Überflutungs- und Hochwasservermeidung zu leisten. Die Grenzwerte für eine zulässige Einleitung von Abwasser in die Kanalisation werden immer weiter verschärft. Entsprechend steigen auch die Anforderungen an die Retentionsfähigkeit von Dachbegrünungen. So gibt es viele (Neu-)Baugebiete, bei denen Dachbegrünungen, zumeist mit einem festgelegten Abflussbeiwert C entsprechend der Forschungsgesellschaft Landschaftsentwicklung Landschaftsbau e. V. (FLL), über den Bebauungsplan vorgeschrieben werden. Zumeist wird hier ein Abflussbeiwert C von 0,5 oder 0,3 als Bemessung vorgesehen, was einem Abfluss von 50 bzw. 30 % im Vergleich zu einer versiegelten Flächen mit dem Abflussbeiwert 1 = 100 % entspricht.

Dem Abflussbeiwert C wird ein Starkniederschlagsereignis von 300 Liter pro Sekunde und Hektar für eine Dauer von 15 Minuten zugrunde gelegt. Dieses entspricht der Menge von 27 Litern je Quadratmeter. 27 Liter entsprechen gemäß den (derzeitig) gültigen Normen und Niederschlagsdaten des sogenannten Kostra-Atlas (statistische Niederschlagereignisse, basierend auf Daten des Deutschen Wetterdienstes (DWD)) in den meisten Städten und Kommunen einem Niederschlagereignis, welches regional unterschiedlich statistisch einmal im Jahrhundert oder zumindest einmal in 50 Jahren eintritt. Allerdings kommen solche "Jahrhundertereignisse" inzwischen wesentlich öfter vor, und weder die erst kürzlich an den Klimawandel angepasste DIN zur Bemessung der Wassermengen und notwendigen Dimensionierung der Entwässerungseinrichtungen noch der bald erscheinende überarbeitete Kostra-Atlas kommen der Realität wirklich nahe, sondern hinken systembedingt der Realität immer hinterher. Zudem sind die Entwässerungseinrichtungen, Kanalisationen etc. oft noch auf einem Stand von vor einigen Jahrzehnten, also in der Dimensionierung weder dem Klimawandel noch der zunehmenden Flächenversiegelung angepasst.

Zunehmend werden daher im Auftrag von Städten und Kommunen schärfere Auflagen als bisher gemacht und konkrete Abflussmengen vorgegeben, die wesentlich geringer als die bisherigen Vorgaben nach Abflussbeiwert C sind. Beispielsweise werden Werte gefordert, die bei 1 bis 10 Litern Spitzenabfluss je Sekunde und Hektar liegen, und das über die gesamte Dauer des Abflusses. Hier kommen oft Werte heraus, die eine Ablaufverzögerung über 5 Stunden und mehr, vereinzelt sogar 24 Stunden und mehr ergeben. Gelegentlich werden auch Entleerungszeiten mit zum Beispiel 3, 6, 12 oder 24 Stunden vorgegeben. Wichtig ist hierbei auch, dass nicht nur die Dachflächen in die Berechnungen mit einbezogen werden, sondern das gesamte Grundstück, also auch weitere versiegelte Flächen wie Wege, Straßen und Hofflächen. Dies geht sehr weit über die bisherigen Anforderungen hinaus.

Mit den derzeit auf dem Markt befindlichen Dachbegrünungssystemen, wie z.B. das Abflusssystem aus EP 1 607 542, welches die Merkmale des Oberbegriffs des ersten Anspruchs offenbart, können die erhöhten Anforderungen bisher nicht befriedigt werden. Besonders die stark verlängerten Retentionszeiten werden üblicherweise nicht erreicht. Der Grund hierfür liegt unter anderem darin, dass die heutigen Systemen in der Regel zur Erfüllung des Abflussbeiwerts C ausgelegt sind - also den vorgegebenen Wasserablauf nur für den vorgeschriebenen Zeitraum von 15 Minuten oder wenig darüber hinaus sicherstellen. Nach Ablauf dieses Zeitraums darf die vorgegebene Wassermenge dann jedoch wieder überschritten werden, das heißt, die in die Kanalisation eingespeiste Wassermenge steigt wieder an. Fällt weiterhin Niederschlag, saugt sich die Dachbegrünung wie ein Schwamm allmählich voll, und bei völliger Sättigung steigt der Abflussbeiwert auf 1, was bedeutet, dass jeder weitere Niederschlag ungehindert und vollständig vom Dach abläuft. Um auch die verschärften Vorschriften eines besseren Wasserrückhalts über einen längeren Zeitraum zu erfüllen, bedarf es einer noch stärkeren Verzögerung, also Drosselung der Ablaufmengen, je nach Vorgaben gegebenenfalls über die gesamte Dauer eines Starkregenereignisses bzw. die gesamte Dauer das Wasserablaufes. Theoretisch wäre es denkbar, dieses Problem durch Erhöhung der Speicherkapazität zu lösen, jedoch stehen dem in der Regel bereits baustatische Beschränkungen im Wege.

Aufgabe der Erfindung ist es entsprechend, ein Wasserabflusssystem anzugeben, dass diesen Anforderungen entspricht, selbst bei länger andauernden Starkregenereignissen einen hohen Wasserrückhalt sicherstellt und einen flexiblen Wasserhaushalt gewährleistet.

Die Lösung dieser Aufgabe gelingt mit dem Wasserabflusssystem nach Anspruch 1, einem dieses System verwendenden Kies- oder Gründach nach Anspruch 12 und dem Verfahren zum Regulieren des Wasserstandes auf einem Kies- oder Gründach nach Anspruch 13. Bevorzugte Ausführungsformen sind in den abhängigen Ansprüchen beschrieben.

Die Erfindung betrifft in einem ersten Aspekt ein Wasserabflusssystem, umfassend einen auf einer einen Abfluss aufweisenden Wasseraufstandsfläche aufstellbaren Schacht mit einer einen Hohlraum wasserdicht umgebenden Seitenwandung, welche wenigstens einen Einlass mit wenigstens einer Einlassöffnung aufweist, durch die Wasser in den Hohlraum eintreten kann. Zum wasserdichten Verschließen der wenigstens einen Einlassöffnung ist wenigstens ein Verschluss vorhanden. Außerdem sind eine Betätigungsvorrichtung zum Bewegen des wenigstens einen Verschlusses für das Einstellen der Öffnungsgröße der wenigstens einen Einlassöffnung sowie eine Steuervorrichtung zum Steuern der Betätigungsvorrichtung vorgesehen.

Das erfindungsgemäße Wasserabflusssystem erlaubt es, mittels Steuervorrichtung und Betätigungsvorrichtung den Verschluss zum wasserdichten Verschließen der wenigstens einen Einlassöffnung individuell und nach Bedarf einzustellen. Anders als im eingangs beschriebenen Stand der Technik, bei dem es zwar möglich war, die Öffnungsgröße der Durchflussöffnung und damit die Abflussmenge pro Zeit entsprechend dem jeweiligen Gründach individuell fest vorzugeben, ermöglicht es die vorliegende Erfindung nun zusätzlich, die Abflussmenge nicht nur entsprechend den jeweiligen Gegebenheiten anzupassen, sondern auch über die Zeit zu verändern. Dadurch wird es beispielsweise möglich, bei sehr starken Regenfällen die Öffnungsgröße der wenigstens einen Einlassöffnung zu vergrößern, um so die Abflussmenge zeitlich begrenzt zu erhöhen. Zudem kann bei nachlassendem Niederschlag oder bei Trockenheit die wenigstens eine Einlassöffnung verkleinert oder ganz verschlossen werden, um zu verhindern, dass der Wasserspeicher auf der Wasseraufstandsfläche ganz geleert wird und beispielsweise für eine auf der Wasseraufstandsfläche vorhandene Dachbegrünung keine ausreichende Bewässerung mehr vorhanden ist.

Zusammengefasst kann also festgehalten werden, dass die Erfindung nicht nur eine individuellen Planung und Einstellung der Wasserspeichermenge auf der Wasseraufstandsfläche und der Ablaufmenge pro Zeit erlaubt, sondern zudem eine individuelle, gezielte und kontinuierliche Anpassung des Wasserhaushalts über die gesamte Betriebszeit ermöglicht. Die Steuerbarkeit der Größe der Einlassöffnung und damit der Abflussmenge pro Zeit erlaubt zudem eine Anpassung praktisch in Echtzeit von einem externen Standort aus und daher mit einem erheblich geringeren Aufwand als bislang. Obwohl die Steuerbarkeit in Echtzeit auch eine sehr schnelle Reaktion auf neue Umgebungsbedingungen wie beispielsweise Extremregenfälle ermöglicht, liegt ein wesentlicher Vorteil der Erfindung in der Möglichkeit, vorausschauende Einstellungen über die Betriebsdauer des Wasserabflusssystems vornehmen zu können.

In einer bevorzugten Ausführungsform der Erfindung ist die Steuervorrichtung daher so ausgebildet, dass sie die Betätigungsvorrichtung in Abhängigkeit von extern empfangenen Wetterdaten steuern kann. Bei diesen Wetterdaten handelt es sich besonders bevorzugt um Wetterprognosedaten und insbesondere prognostizierte Niederschlagsmengen. Zweckmäßig werden dabei Wetterdaten eingesetzt, die sich auf den jeweiligen Standort beziehen, an dem sich das erfindungsgemäße, Wasserabflusssystem befindet. Solche Wetterdaten sind von verschiedenen Anbietern beispielsweise in Form von sogenannten Wetter-Apps verfügbar, die speziell für einen bestimmten vorgegebenen Standort abgerufen werden können. Diese Wetterdaten können entweder über Kabel oder, was bevorzugt ist, kabellos an des Wasserabflusssystem übertragen werden. Besonders bevorzugt ist die. Übertragung der Wetterdaten per Mobilfunk. Das zum Empfang der Wetterdaten im Wasserabflusssystem vorgesehene Empfangsgerät ist in diesem Fall dann ein Mobilfunkgerät, insbesondere ein Smartphone. Es könnte sich jedoch auch um einen Tablet-PC oder jedes andere geeignete Empfangsgerät handeln. Dieses wird an einem geeigneten Ort im Wasserabflusssystem angeordnet und mit der Steuervorrichtung verbunden, so dass die vom Empfangsgerät empfangenen Wetterdaten an die Steuervorrichtung übertragen werden können. Die Übertragung der Daten geschieht hier bevorzugt mittels Kabel, jedoch sind auch kabellose Übertragungsmöglichkeiten denkbar, beispielsweise eine Bluetooth-Verbindung.

Die Steuerung erfolgt bevorzugt nicht nur anhand der Wetterdaten für den aktuellen Tag, sondern unter Berücksichtigung der Wetterprognosedaten für mindestens den Folgetag, bevorzugt für mehrere Tage im voraus. Auf diese Weise ist es beispielsweise möglich, Vorbereitungen für zu erwartende Starkregenereignisse oder längere Trockenperioden zu treffen. Beispielsweise kann errechnet werden, welchen Speicherbedarf die für die Folgetage zu erwartenden Niederschläge benötigen. Um dieses erwartete Niederschlagsvolumen aufnehmen zu können, kann gegebenenfalls Speichervolumen auf der Wasseraufstandsfläche freigemacht werden, um so Platz für die neuen Niederschläge zu schaffen. Die Steuerung des Wasserabflusssystems erfolgt entsprechend derart, dass die Betätigungsvorrichtung den wenigstens einen Verschluss für einen errechneten Zeitraum soweit öffnet, dass von der Wasseraufstandsfläche soviel Wasser abläuft, wie dem Volumen der zu erwartenden neuen Niederschläge entspricht. Falls gewünscht, kann auch eine Sicherheitsmarge eingeplant werden, um für ausreichend Speichervolumen auch dann zu sorgen, wenn die Niederschläge tatsächlich größer werden als angekündigt. Werden Wetterprognosedaten für mehrere Tage im voraus berücksichtigt, kann das Ablassen des gespeicherten Wassers von der Wasseraufstandsfläche so rechtzeitig erfolgen, dass vor Eintritt des zu erwartenden Starkregenereignisses die erlaubte Abflussmenge während des Ablassens des Wassers zur Freimachung von Speichervolumen nicht überschritten wird. Nachdem die erforderliche Wassermenge von der Wasseraufstandsfläche abgelassen wurde (der errechnete Öffnungszeitraum für den wenigstens einen Verschluss abgelaufen ist), wird der Betätigungsvorrichtung von der Steuervorrichtung ein Steuersignal übermittelt, worauf die Betätigungsvorrichtung den wenigstens einen Verschluss und damit die wenigstens eine Einlassöffnung verkleinert oder vollständig verschließt, so dass der prognostizierte Starkregen, sobald er zu fallen beginnt, gesammelt wird und nicht oder nur mit der erlaubten Verzögerung von der Wasseraufstandsfläche in die Kanalisation abgeleitet wird.

Umgekehrt kann bei einer erwarteten Trockenperiode das Abfließen von Wasser von der Wasseraufstandsfläche unterbrochen werden. Der wenigstens eine Verschluss wird also geschlossen, sodass kein Wasser mehr abläuft und eventuell vor der angekündigten Trockenperiode noch fallender Regen gesammelt wird. In einer Weiterbildung der Erfindung kann ein Bewässerungssystem vorgesehen sein, das ebenfalls von der Steuervorrichtung gesteuert werden kann. Dieses wird von der Steuervorrichtung in Betrieb gesetzt, wenn das auf der Wasserablauffläche gespeicherte Wasser für die Bewässerung einer Dachbegrünung nicht mehr ausreicht. In einer bevorzugten Ausbildungsform der Erfindung kann zur Ermittlung der gespeicherten Wassermenge ein Wasserstandsanzeiger vorhanden sein, der entweder kontinuierlich Messwerte an die Steuervorrichtung übermittelt oder eine Warnung weiterleitet, wenn der Wasserstand unter einen vorgegebenen Wert fällt. Dann oder alternativ nach Ablauf einer vorgegebenen Zeit, innerhalb derer der Wasserstand sich nicht auf einen ausreichenden Wert erholt hat, setzt die Steuervorrichtung die Bewässerungsvorrichtung in Betrieb, um eine ausreichende Wasserversorgung der Bepflanzung zu sichern. Der Wasserstandsanzeiger kann auch unabhängig vom Vorhandensein einer Bewässerungsvorrichtung vorteilhaft zur Ermittlung des Wasserstandes auf der Wasseraufstandsfläche eingesetzt werden, also beispielsweise auch im vorgehend beschrieben Fall zur Ermittlung des zur Verfügung stehenden freien Speichervolumens in Vorbereitung auf Regenfälle.

Die zur Berechnung der Steuervorgänge notwendigen Informationen und Daten sind bevorzugt in der Steuervorrichtung, die hierfür einen geeigneten Speicher aufweist, hinterlegt. Notwendige Daten sind insbesondere die bereits aus dem Stand der Technik für die Auslegung von begrünten Dächern oder Kiesdächer mit Wasserretention verwendeten Daten wie insbesondere Daten zur Berechnung des maximalen Speichervolumens, der zulässigen Ablaufmengen, des Retentionsvermögens usw.. Zu diesen hinterlegten Daten gehören zweckmäßig auch die von den Behörden geforderte Abflussspende (z. B. erlaubte Ablaufmengen in Liter/Sekunde . Hektar o. ä.), die Wasseraufstandsfläche (die Fläche, die als Retentionsfläche genutzt werden kann), die sogenannten Einzugsflächen (umliegende Flächen, von denen Wasser auf die Wasseraufstandsfläche gelangen kann), die für den jeweiligen Standort zu erwartenden Niederschläge (üblicherweise von den Behörden vorgegebene Niederschlagsparameter gemäß DIN-Norm oder Kostra-Atlas zur Bemessungshäufigkeit extremer Wetterereignisse), die Entleerungszeit (Zeitraum, innerhalb dessen die errechneten Niederschlagswassermengen von den Retentionsflächen abfließen dürfen), die Anstauhöhe (ergibt mit der Größe der Retentionsfläche das aufnehmbare Wasservolumen), die Anzahl der Abläufe in der Wasserablauffläche und der Ablaufquerschnitt. In an sich bekannter Weise kann mit diesen Parametern neben dem maximalen Ablaufquerschnitt auch der maximale Öffnungsquerschnitt der Einlassöffnungen für jeden einzelnen Einlass des erfindungsgemäßen Wasserabflusssystems errechnet werden. Weiterhin können Werte zur berechneten Verdunstung und beispielsweise baustatische Werte in die Berechnung mit einfließen und im Speicher hinterlegt sein. Anhand dieser Werte lassen sich das maximale Anstauvolumen und die maximale Abflussmenge pro Zeit von der Wasseraufstandsfläche errechnen. Weiterhin können Volumenverluste wie beispielsweise durch Verdunstung, vorzugsweise in Abhängigkeit von der Außentemperatur, berücksichtigt werden. Die Grundauslegung und Grundeinstellungen des Wasserabflusssystems und deren Berechnungen entsprechen prinzipiell denjenigen des Standes der Technik.

Um den Speicherbedarf für die prognostizierten Niederschläge im voraus berechnen zu können, können für die jeweils für den Standort bekannten Einzugsflächen und Wasseraufstandsflächen die entsprechenden Zuflussvolumina für die von einer Wetter-App oder sonstigen Wettervorhersage prognostizierten Niederschlagsmengen ausgerechnet werden. Für die prognostizierten Niederschlagswerte, die beispielsweise in Liter pro Quadratmeter angegeben sind, können für den jeweiligen Standort im Speicher der Steuerungseinheit vorab errechnete Zuflussvolumina für die jeweiligen Niederschlagsmengen in einem bestimmten Zeitraum hinterlegt werden. Aus diesen Zuflussvolumina ergeben sich dann wiederum die Speichervolumina, die zur Aufnahme der prognostizierten Niederschlagsmengen zur Verfügung gestellt werden müssen. Anhand dieser Speichervolumina können dann wiederum die Wassermengen pro Zeit berechnet werden, die von der Wasseraufstandsfläche abgelassen werden müssen, um Platz für die zu erwartenden Niederschläge zu schaffen. Entsprechend wird dann berechnet, für wie lange - und gegebenenfalls wie weit, wenn ein nur teilweises

Öffnen des Verschlusses möglich ist - der wenigstens eine Verschluss geöffnet werden muss, damit durch die wenigstens eine Einlassöffnung das errechnete Abflussvolumen abgelassen werden kann, bevor das prognostizierte Niederschlagsereignis eintritt. Entsprechend diesen errechneten Steuerparametern wird dann durch die Steuervorrichtung die Betätigungsvorrichtung betätigt, die wiederum entsprechend den errechneten Parametern die wenigstens eine Einlassöffnung ganz oder teilweise für den errechneten Zeitraum öffnet, um das berechnete Abflussvolumen abzulassen. Im Anschluss daran wird die Einlassöffnung dann wieder ganz oder teilweise verschlossen (beispielsweise abhängig vom vorgegebenen Abflussbeiwert), um das errechnete Niederschlagsvolumen aufnehmen zu können.

In der vorstehend beschriebenen Variante werden die Berechnungen anhand von vorab in der Steuervorrichtung hinterlegten Werten und Berechnungsformeln unter Einbeziehung der von extern übermittelten Wetterdaten berechnet. In einer alternativen Variante ist es jedoch ebenfalls möglich, diese Berechnungen an einem externen Standort, außerhalb des Wasserabflusssystems, vorzunehmen. Beispielsweise kann für die Berechnung das Rechenzentrum eines Betreibers verwendet werden, der die benötigten Steuerparameter für den jeweiligen Standort berechnet und die Steuerparameter dann kabelgebunden oder kabellos an die Steuervorrichtung des erfindungsgemäßen Wasserabflusssystems übermittelt. Die kabellose Übermittlung kann, wie schon vorstehend beschrieben, mittels Mobilfunk erfolgen, wozu im Wasserabflusssystem ein Mobilfunkgerät installiert ist.

In einer weiteren bevorzugten Ausführungsform umfasst das Wasserabflusssystem nicht nur einen Empfänger, sondern auch einen Sender zum Übertragen von Meldungen und/oder Daten an einen externen Empfänger. Bevorzugt handelt es sich bei diesem Sender erneut um ein Mobilfunkgerät, zweckmäßig um das selbe Mobilfunkgerät, das bereits als Empfänger der Wetterdaten dient. Der Sender, konkret das Mobilfunkgerät, kann einerseits dazu dienen, Messwerte des Systems an ein externes Rechenzentrum zu übertragen, wo mit diesen Messwerten Berechnungen vorgenommen werden, um Steuerdaten zu ermitteln, die dann erneut mittels Mobilfunk an das Mobilfunkgerät des Wasserabflusssystems zurückgesendet werden. Alternativ oder zusätzlich zu dieser Funktion kann der Sender auch dazu verwendet werden, Zustandsmeldungen und insbesondere Fehleranzeigen an einen externen Empfänger abzusenden. Im Falle einer Störung kann so sehr schnell eine Wartung oder Reparatur des Wasserabflusssystems durchgeführt werden. Besonders bevorzugt erfolgt diese Wartung oder Reparatur per Fernwartung, also durch externen Zugriff auf die Steuervorrichtung und über diese auf die angeschlossenen Komponenten, was den Aufwand und die Kosten erheblich reduziert.

Das erfindungsgemäße Wasserabflusssystem eignet sich besonders für die Verwendung auf Kiesdächern oder begrünten Dächern, nachfolgend kurz als Gründächer bezeichnet. Das Wasserabflusssystem eignet sich grundsätzlich jedoch auch für die Verwendung auf anderen Wasseraufstandsflächen, auf denen ein bestimmtes Wasservolumen eine bestimmte Zeit lang zurückgehalten und/oder zeitlich verzögert und kontrolliert der Kanalisation zugeleitet werden soll. Das erfindungsgemäße Wasserabflusssystem wird im Folgenden für die Verwendung auf einem Dach, insbesondere einem Gründach, weiter erläutert. Bei der Wasseraufstandsfläche handelt es sich in diesem Fall um eine Dachfläche, die einen Abfluss aufweist, durch den hindurch Wasser in die Kanalisation eingeleitet wird. Von seinem Grundaufbau entspricht das erfindungsgemäße Wasserabflusssystem solchen Wasserabflusssystemen, wie sie bereits bisher im Stand der Technik verwendet wurden, insbesondere solchen, wie sie in der DE 198 52 561 C1 beschrieben sind. Das Wasserabflusssystem umfasst zunächst einen Schacht, der mit seinen Seitenwandungen einen Hohlraum wasserdicht umgibt. Dieser Schacht wird oberhalb des Abflusses auf der Dachfläche aufgestellt. Um zu verhindern, dass Wasser unterhalb der Schachtwände von der Dachfläche in den Hohlraum eindringt und ungebremst durch den Abfluss in der Dachfläche abfließt, sollte die Unterkante des Schachtes möglichst wasserdicht auf der Dachfläche aufgestellt werden. Bevorzugt ist hierfür zwischen Schachtunterkante und Dachfläche eine Klebeverbindung oder Dichtung angeordnet. Beispiele geeigneter Dichtungen sind unter anderem solche, wie sie für das Abdichten von Fensterrahmen in der Fensterlaibung verwendet werden, zum Beispiel gegebenenfalls selbstklebende Butyldichtungen, Kompribänder (elastische geschlossenzellige geschäumte Kunststoffbänder) und mehrkomponentige aushärtbare Flüssigkunststoff-Dichtstoffe oder Kombinationen derselben. Um die Anbringungsfläche für die Dichtung am Schacht zu vergrößern, kann die Unterkante des Schachtes in Form eines Flansches ausgestellt sein. Die Dichtung wird dann zweckmäßig an der in Richtung auf die Dachfläche weisenden Seite des Flansches angebracht.

Die Höhe der Seitenwandung des Schachtes ist zweckmäßig so bemessen, dass sie der gewünschten Anstauhöhe des Wassers auf der Dachfläche entspricht. Die Höhe ist unter anderem abhängig von der Art der gewählten Dachbegrünung oder Kiesschüttung und liegt für Gründächer in der Regel zwischen 2 und 8 cm. In der den Hohlraum des Schachtes wasserdicht umgebenden Seitenwandung ist zwar wenigstens ein Einlass vorhanden, durch den hindurch Wasser in den Hohlraum und von dort in den Auslass in der Dachfläche eintreten kann, jedoch ist dieser Einlass mit einem Verschluss verschließbar, so dass bei geschlossenem Verschluss - mit Ausnahme geringer Mengen Wassers, die aufgrund kleinerer Undichtigkeiten eindringen - praktisch kein Wasser im Bereich der geschlossenen Seitenwandung in den Hohlraum eintreten kann. Solange der wenigstens eine Einlass durch den Verschluss verschlossen ist, staut sich daher Wasser bis zur Höhe der Seitenwandung um den Schacht herum auf der Dachfläche an. Aus der Aufstandsfläche des Wassers auf der Dachfläche sowie der Anstauhöhe (entsprechend der Höhe der den Hohlraum wasserdicht umgebenden Seitenwandung) errechnet sich - gegebenenfalls abzüglich des Volumens weiterer Aufbauten - das maximale Wasseraufnahmevolumen der Dachfläche.

Um außerhalb der Seitenwandung angestautes Wasser in den Hohlraum und von dort in den Abfluss der Dachfläche hereinzulassen, ist in der Seitenwandung wenigstens ein Einlass mit wenigstens einer Einlassöffnung vorhanden. Um den Aufbau und die Steuerung des Wasserabflusssystems möglichst einfach gestalten zu können, ist es bevorzugt, nur einen einzigen Einlass pro Schacht zu verwenden. Ist es jedoch erforderlich, innerhalb kurzer Zeit große Mengen Wassers von der Dachfläche ablaufen zu lassen, können auch mehr als ein Einlass und/oder mehr als eine Einlassöffnung vorgesehen sein. In einer einfachen Variante besteht der Einlass aus der Einlassöffnung, die in die Seitenwandung eingebracht ist. Als Verschluss kann eine Klappe oder ein Schieber dienen, der vor die Einlassöffnung geklappt oder geschoben werden kann. Die Einlassöffnung befindet sich zweckmäßig in einem unteren, der Dachfläche benachbarten Bereich der Seitenwandung. Sie kann so angebracht sein, dass sie die untere Seitenkante der Seitenwandung durchschneidet, so dass eine Seite der Einlassöffnung unmittelbar an die Dachfläche angrenzt. Da eine solche Einlassöffnung jedoch schlecht vollständig abzudichten ist, ist es bevorzugt, einen Steg zwischen der Unterkante der Seitenwandung und der Unterkante der Einlassöffnung zu belassen, die Einlassöffnung also etwas oberhalb der unteren Kante der Seitenwandung anfangen zu lassen. Dies bedeutet, dass das Wasser von der Dachfläche nicht vollständig durch die Einlassöffnung ablaufen kann, sondern Wasser bis zur Höhe der Unterkante der Einlassöffnung auf der Dachfläche stehenbleibt. Dies kann jedoch durchaus beabsichtigt sein, da es für manche Dachbegrünungen vorteilhaft ist, einen permanenten Wasserspeicher zur Versorgung der Bepflanzung auf der Dachfläche zu belassen. Die Höhe der Unterkante der Einlassöffnung kann in diesem Fall entsprechend der Menge des gewünschten permanenten Wasserspeichers gewählt werden.

Prinzipiell können im Rahmen der Erfindung Einlass und Einlassöffnung in jeder geeigneten Weise variiert werden. Entsprechend kann auch der Verschluss variieren, und es kann sich zum Beispiel um einen Schieber, eine Klappe, ein Ventil oder Ähnliches handeln. In einer bevorzugten Variante der Erfindung ist der Einlass in Form einer sich in den Hohlraum hinein erstreckenden Schleuse ausgebildet. Diese Schleuse besitzt eine Zugangsöffnung, die der vorstehend beschriebenen Einlassöffnung in etwa entspricht. Nun ist es jedoch bevorzugt, diese Zugangsöffnung bis auf die Dachfläche hinunter, das heißt, die Seitenkante der Seitenwandung durchtrennend, auszubilden. Dies ermöglicht einen vollständigen Eintritt des auf der Dachfläche angestauten Wassers in die Schleuse hinein. Anschließend an diese Zugangsöffnung erstrecken sich zwei Seitenwände, die sich an die äußeren Seitenwandungen des Schachtes unmittelbar anschließen, in den Hohlraum hinein und gehen an ihrem Ende in eine stirnseitige Endwand über. Die beiden Seitenwände und die stirnseitige Endwand bilden die seitliche Begrenzung der Schleuse. Die Einlassöffnung des schleusenartigen Einlasses in den Hohlraum ist im Bereich dieser Schleusenwand ausgebildet, bevorzugt in der stirnseitigen Endwand. Entsprechend befindet sich auch der Verschluss für diese Einlassöffnung in diesem Bereich. Die Höhe der Schleusenwände entspricht vorzugsweise der Höhe der Seitenwandung des Schachtes, so dass Wasser weiterhin bis zur Höhe dieser Seitenwandungen aufgestaut werden kann. Der Vorteil des schleusenartigen Aufbaus des Einlasses besteht unter anderem darin, dass Einlassöffnung und Verschluss von oben durch den Schacht zugänglich sind und auf diese Weise leichter gewartet werden können. Außerdem ist es möglich, Einlassöffnung und Verschluss einen Partikelfilter vorzuschalten, der vorzugsweise in Form eines Gitters oder Siebes in Strömungsrichtung vor Einlassöffnung und Verschluss angeordnet ist. Zweckmäßig ist der Partikelfilter so angeordnet, dass er von oben durch den Schacht entnommen und gereinigt oder ersetzt werden kann. Auf diese Weise wird das Eindringen von Verschmutzungen in die Einlassöffnung, den Verschluss und den Dachabfluss verhindert und der Wartungsaufwand dieser Komponenten minimiert.

Die Einlassöffnung kann erneut in einer Ausnehmung der Schleusenwandung bestehen, ähnlich der beschriebenen Einlassöffnung in der Seitenwandung des Schachtes. Entsprechend kann es sich bei dem Verschluss hierfür wiederum um eine Klappe oder einen Schieber handeln. In einer bevorzugten Ausführungsform ist die Einlassöffnung jedoch in einem Hohlzylinder ausgebildet, der in einen Abschnitt der Schleusenwandung eingesetzt ist. In der Wandung des Hohlzylinders sind, zweckmäßig in gegenüberliegenden Seiten, zwei Öffnungen ausgebildet. Durch eine tritt Wasser in das Innere des Hohlzylinders ein, durch die andere aus diesem wieder heraus und von dort in den Hohlraum des Schachtes, von wo aus das abfließende Wasser wiederum dem Abfluss der Dachfläche zugeführt wird. Zum Öffnen und Schließen der beiden Öffnungen im Zylinder wird im Inneren des Zylinderhohlraums ein Kolben geführt, der mittels der Betätigungsvorrichtung auf und ab bewegt werden kann. Im vollständig angehobenen Zustand des Kolbens werden die Öffnungen ganz freigegeben, im vollständig abgesenkten Zustand sind beide Öffnungen verschlossen. Durch Zwischenpositionen können gezielt bestimmte Öffnungsquerschnitte und damit bestimmte Auslassgeschwindigkeiten und -mengen eingestellt werden. Um ein vollständiges wasserdichtes Verschließen der Öffnungen sicherzustellen, ist es bevorzugt, die Öffnungen in der Zylinderwandung nicht unmittelbar an die Dachfläche angrenzend, sondern etwas nach oben versetzt anzuordnen.

Als Betätigungsvorrichtung zum Bewegen des Verschlusses - im letztgenannten Fall also des Kolbens - kann jede geeignete Bewegungsvorrichtung verwendet werden, beispielsweise ein Elektromotor, ein elektromagnetischer, hydraulischer oder pneumatischer Antrieb. Wegen der geringen Wartungsanfälligkeit in der feuchten und starken Temperaturschwankungen ausgesetzten Umgebung ist der Einsatz eines pneumatischen Antriebes bevorzugt, der zudem den Vorteil einer nahezu verschleiß- und verlustfreien Kraftübertragung besitzt.

Die Betätigungsvorrichtung ist - ebenso wie die Steuervorrichtung, ein gegebenenfalls vorhandenes Empfangs- oder Sendegerät, insbesondere in Form eines Mobilfunkgeräts - zweckmäßig ebenfalls im Inneren des Schachtes angeordnet. Das obere, von der Dachfläche abgelegene Ende des Schachtes bildet eine Wartungsöffnung, welche den Zugriff auf die im Hohlraum vorhandenen Komponenten des Wasserabflusssystems und damit ihre leichte Wartung ermöglicht. Diese Wartungsöffnung wird zweckmäßig mit einem abnehmbaren oder aufklappbaren Deckel verschlossen. Bevorzugt ist dieser Deckel abschließbar, so dass die im Schacht angeordneten Komponenten nicht nur vor Witterungseinflüssen, sondern auch vor Zugriffen durch Unbefugte geschützt sind. Auf dem Deckel befestigt oder alternativ in der Nähe des Schachtes aufgeständert kann ein Solarmodul vorgesehen sein, mit dem die stromverbrauchenden Komponenten des Wasserabflusssystems mit Strom versorgt werden können. Zur Speicherung des durch das Solarmodul erzeugten Stroms ist zudem zweckmäßig ein Stromspeicher, beispielsweise in Form eines Akkus, vorgesehen. Besonders zweckmäßig werden sämtliche Komponenten, also zum Beispiel Betätigungsvorrichtung, Steuervorrichtung, Empfangsgerät und Sender, mit Solarstrom versorgt. Auf diese Weise ist ein vollkommen autarker Betrieb des Wasserabflusssystems möglich.

Der Gesamtaufbau des Schachts und insbesondere der den Hohlraum umgebenden Seitenwandung hängt von der beabsichtigten Verwendung, im Falle eines Gründaches hauptsächlich von der Art der auf der Dachfläche aufgebrachten Dachbegrünung ab. Grundsätzlich wird hier zwischen ein- und mehrschichtigen Aufbauten unterschieden, die für verschiedene Arten von Bepflanzungen eingesetzt werden. Einschichtige Aufbauten finden bei eher einfachen Bepflanzungen wie beispielsweise einer Sedumbepflanzung Anwendung, während mehrschichtige Aufbauten prinzipiell bei hochwertigeren Bepflanzungen wie beispielsweise einer Bepflanzung mit Stauden, Sträuchern oder Bäumen gewählt wird. Abhängig vom Aufbau der Dachbegrünung variiert auch deren Höhe und damit die Höhe des verwendeten Wasserabflusssystems und die Höhe des darin enthaltenen Schachtes. Der Schacht schließt entweder mit der Oberfläche des Substrataufbaus ab oder steht geringfügig über diesen vor. Um das erfindungsgemäße Wasserabflusssystem und dabei insbesondere den Schacht in seiner Höhe an den jeweiligen Dachbegrünungsaufbau anpassen zu können, wird besonders bevorzugt ein modulartig aus mehreren Seitenwand-Etagen aufgebauter Schacht eingesetzt, bei dem je nach gewünschter Höhe und Art des zu verwendenden Schachtes mehrere Module/Seitenwand-Etagen-Teile aufeinander aufgesetzt werden, bis die gewünschte Schachthöhe erreicht ist. Die einzelnen Modulteile können dabei gleichartig oder verschieden aufgebaut sein. Letzteres ist der Regelfall, da die unterschiedlichen Etagen des Schachtes auch unterschiedliche Funktionen erfüllen müssen.

Im einfachsten Fall wird das im Vorangegangen beschriebene Seitenwandmodul, das den Einlass und die wenigstens eine Einlassöffnung aufweist, als einziges Seitenwandungsteil des Schachtes verwendet. Im Falle höherer oder mehrschichtiger Dachbegrünungen wird dieses Teil als Unterteil eingesetzt, und auf dieses werden ein oder mehrere weitere Seitenwandmodule aufgesetzt. In einer bevorzugten Variante weist das weitere Seitenwandmodul-Teil im Unterschied zu dem Unterteil keine wasserdicht geschlossenen Seitenwände auf, sondern eine Seitenwandung, die wenigstens eine und bevorzugt eine Vielzahl von Öffnungen aufweist, welche als Notüberlauf fungieren können. Beispielsweise kann die Seitenwandung des weiteren Modulteils gitterartig aufgebaut sein, um so einer größeren Wassermenge in kurzer Zeit den Durchtritt in den Hohlraum und von dort in den Dachabfluss zu ermöglichen. Auf diese Weise können übermäßige Wassermengen, die die Speicherkapazität überschreiten, die durch die Seitenwandhöhe des unteren Modulteils definiert wird, durch das geöffnete weitere Seitenwandmodul schnell von der begrünten Dachfläche abgeführt werden. dadurch kann unerwünschte Staunässe, die zur Schädigung der Bepflanzung der Dachbegrünung führen könnten, vermieden werden. Ein zu hoher Wasseranstau auf dem Dach kann auch zu Schäden am Gebäude führen, etwa weil die seitliche Abdichtung nicht die erforderliche Höhe aufweist und so Wasser über diesen sogenannten Anschluss der Abdichtung in das Gebäude eindringen könnte. Ferner könnte ein zu hoher Wasseranstau auch die Statik des Gebäudes überlasten. Daher ist ab einer gewissen, in der Regel berechneten Höhe dieser Notüberlauf vorzusehen. Dieser Notablauf wird aber in der Regel gar nicht zum Einsatz kommen müssen, da durch die wetterabhängige Steuerbarkeit des Wasserhaushalts mittels des erfindungsgemäßen Wasserabflusssystems solche Situationen kaum mehr auftreten werden, in denen die Wasserspeicherkapazität des Dachaufbaus überschritten wird.

Falls erforderlich, kann auf das durchlässigen Seitenwandmodul noch ein weiteres Modulteil aufgesetzt werden, um die nötige Schachthöhe zu erreichen. Bevorzugt handelt es sich bei diesem weiteren Modulteil erneut um einen Modulteil mit wasserdicht geschlossenen Seitenwandungen. Dieses dritte, obere Modulteil entspricht also im Wesentlichen dem unteren Modulteil, nur dass hier kein Einlass mit Einlassöffnung mehr vorhanden ist. Dieses obere Modulteil weist zweckmäßig eine Auflage für einen den Schacht abschließenden Deckel auf. Dieser Deckel kann beispielsweise mit Scharnieren schwenkbar an dem oberen Modulteil angebracht sein oder nur lose auf diesen aufgelegt werden. Außerdem ist es möglich, auch die weiteren Modulteile mit Zwischenböden oder Einlagen in Form von Gittern oder Ähnlichem gegeneinander abzutrennen. Als Material für die Teile des Schachtes kommen beispielsweise Aluminium oder Edelstahl (beschichtet oder unbeschichtet) oder auch Kunststoff in Frage.

Die Erfindung soll nachfolgend anhand von Zeichnungen näher erläutert werden. Die Zeichnungen sind rein schematisch und dienen lediglich der Verdeutlichung bevorzugter Ausführungsformen der Erfindung, ohne dass diese darauf beschränkt wäre. In den Figuren bezeichnen gleiche Bezugszeichen gleiche Teile. Im Einzelnen zeigen:
- Fig. 1(a) und 1(b): Beispiele zweier Schächte von erfindungsgemäßen Wasserabflusssystemen mit unterschiedlicher Bauhöhe;
- Fig. 2: eine Außenansicht eines weiteren erfindungsgemäßen Wasserabflusssystems;
- Fig. 3: einen Querschnitt durch ein Kiesdach mit einem erfindungsgemäßen Wasserabflusssystem;
- Fig. 4: einen Querschnitt durch ein Gründach mit einem erfindungsgemäßen Wasserabflusssystem;
- Fig. 5: den Schacht der Figur 1 (b) in Draufsicht auf dessen Unterseite;
- Fig. 6: den Schacht der Figur 5 in Teildraufsicht auf dessen Oberseite;
- Fig. 7(a) und 7(b): Querschnittsdarstellungen des Verschlusssystems für das Wasserabflusssystem gemäß Figuren 5 und 6 in geschlossener und geöffneter Stellung;
- Fig. 8: eine weitere Querschnittsdarstellung eines erfindungsgemäßen Wasserabflusssystems.

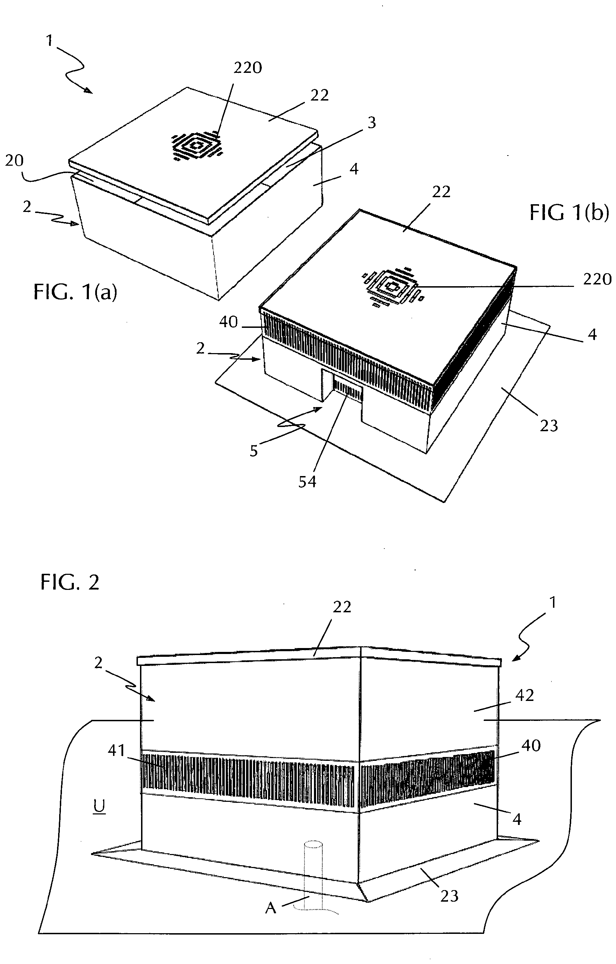

Figuren 1(a), 1(b) und 2 zeigen verschiedene Beispiele eines Schachtes, welcher Bestandteil eines erfindungsgemäßen Wasserabflusssystems 1 ist. Der Schacht 2 bildet jeweils den Grundkörper des erfindungsgemäßen Wasserabflusssystems und nimmt dessen wesentliche Komponenten auf. Der Aufbau der Schächte 2 entspricht im Wesentlichen demjenigen von Schächten, wie sie auch bisher auf Kiesdächern oder begrünten Dächern eingesetzt wurden. Alle Schächte 2 besitzen hier einen rechteckigen, konkret quadratischen, Grundriss von hier 50 auf 50 cm (ohne Flansche), jedoch könnten sie grundsätzlich auch jede andere beliebige Form aufweisen. Alle Schächte weisen Seitenwandungen auf, die hier jeweils einen quaderförmigen Hohlraum 3 umgeben. Die Schächte 2 sind sowohl zur Ober- als auch zur Unterseite hin offen, aber mit einem Deckel 22 auf der Oberseite verschließbar. Allen Schächten ist gemeinsam, dass sie einen unteren Teil mit geschlossener Seitenwandung 4 aufweisen, wobei jeweils in einer Seitenwand der Wandung 4 ein Einlass 5 vorhanden ist, welcher mit einem in den Figuren 1 und 2 nicht sichtbaren Verschluss verschließbar ist, so dass durch die Seitenwandung 4 Wasser nur in den Hohlraum 3 eintreten kann, wenn der Verschluss geöffnet ist. Der Einlass 5 ist nur in Figur 1 (b) sichtbar, in Figuren 1 (a) und 2 befindet er sich auf einer vom Betrachter abgewandten Seite.

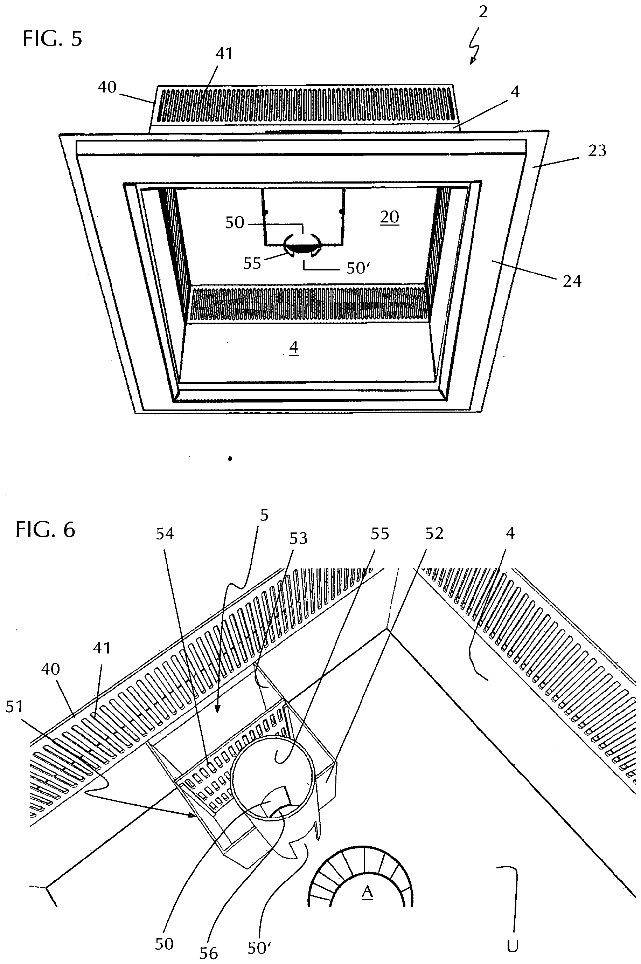

Die drei in Figuren 1 und 2 dargestellten Schächte 2 sind aus modulartig vorgefertigten Seitenwandteilen aufgebaut. Der untere Teil 4 mit den geschlossenen Seitenwandungen und dem Einlass 5 ist bei allen drei Schächten 2 gleich. In den Schächten der Figuren 1(b) und 2 ist an die Unterkante des Seitenwandmoduls 4 jeweils noch ein flanschartiger Rand 23 angeschlossen. Dieser erhöht einerseits die Standfestigkeit der Schächte 2 und erleichtert andererseits die wasserdichte Aufstellung auf einer Wasseraufstandsfläche U, konkret einer Dachfläche. Diese ist in Figur 2 ausschnittweise dargestellt. Wie erkennbar, wird der Schacht 2 so auf der Dachfläche U platziert, dass der Hohlraum 3 über einem Dachabfluss A zu liegen kommt. Durch diesen Dachabfluss A wird Wasser von der Dachfläche U in die Kanalisation befördert. Das erfindungsgemäße Wasserabflusssystem 1 dient dazu, diesen Abfluss des Wassers von Dachfläche U durch den Abfluss A zu kontrollieren und zu regulieren. Aus diesem Grund muss verhindert werden, dass Wasser zwischen der Dachfläche U und der Unterkante des Schachtes 2 unmittelbar zum Abfluss A fließen kann. Daher wird der Schacht 2 wasserdicht an die Dachfläche U angeschlossen. Zur Abdichtung kann einerseits eine Klebeverbindung und andererseits eine Dichtmasse, bevorzugt in Form eines Dichtbandes, eingesetzt werden. Bevorzugt sind solche Dichtungen, wie sie auch zum Abdichten von Fensterrahmen in einer Fensterlaibung verwendet werden. Ein Beispiel ist in Figur 5 dargestellt, die den Schacht der Figur 1(b) von der Unterseite her zeigt. Auf die der Dachfläche U zugewandten Seite der Flansche 23 ist hier ein sogenanntes Kompriband aufgeklebt, also ein Band aus einem elastischen, wasserdichten, geschlossenzelligen Schaumstoff. Dieser wird durch das Gewicht des Schachtes gegen die Dachfläche gepresst, passt sich aufgrund seiner Elastizität an eventuell vorhandene Unebenheiten an und dichtet so den Spalt zwischen Dachfläche U und Flansch 23 wasserdicht ab.

Der Schacht der Figur 1(a) besteht ausschließlich aus dem unteren Modulteil 4 mit geschlossenen Seitenwänden. Auf die Oberseite des Moduls wird ein Deckel 22 aufgesetzt, um die Wartungsöffnung 20 und den Zugang zum Hohlraum 3 zu verschließen. In diesem Fall kann Wasser, wenn der Einlass 5 durch den Verschluss geschlossen ist, im Wesentlichen nur noch durch die Öffnungen 220 im Deckel 22 in den Hohlraum 3 des Schachtes 2 eintreten. Dies ist jedoch erst der Fall, wenn sich Wasser über die Höhe der Seitenwandung 4 hinaus auf dem Dach angestaut hat. Die Öffnungen 220 dienen in diesem Fall als Notablauf, und das durch diese Öffnungen eintretende Wasser wird unmittelbar dem Abfluss A zugeführt, über welchem der Schacht 2 aufgebaut ist. Die Höhe der Seitenwandung 4, hier zum Beispiel 8 cm, bestimmt also zusammen mit der Größe der Wasseraufstandsfläche U, auf der sich Wasser anstauen kann, das Speichervolumen, das auf dem Dach zurückgehalten werden kann.

Der Schacht der Figur 1 (b) unterscheidet sich von demjenigen der Figur 1 (a)-abgesehen von den bereits erwähnten Flanschen 23 - dadurch, dass auf den unteren Modulteil 4 ein zweiter Seitenwandmodulteil 40 aufgesetzt ist. Im Unterschied zum Modulteil 4 besitzt dieser mit Längsschlitzen 41 versehene Seitenwände. Wie im Fall der Figur 1(a) entspricht die Anstauhöhe, mit welcher Wasser auf der Dachfläche U angestaut werden kann, auch in Figur 1(b) der Höhe der Seitenwandung 4. Steigt Wasser über diese Höhe auf der Dachfläche an, fließt es nun durch die Schlitze 41 in das Innere des Hohlraums 3 und von dort durch den Abfluss A vom Dach ab. Gleiches passiert im Fall des Schachtes der Figur 2. Dieser weist jedoch über dem zweiten Seitenwandmodul 40 einen weiteren, dritten Seitenwandmodul 42 auf, der über dem Seitenwandmodul 40 angebracht ist. Alle Seitenwandmodule sind wasserdicht miteinander verbunden, so dass kein Wasser zwischen den Seitenwandmodulteilen in den Hohlraum 3 eindringen kann. Der dritte Seitenwandmodulteil 42 ist umlaufend geschlossen, so dass durch ihn hindurch kein Wasser in den Hohlraum 3 gelangen kann. Der oberste Seitenwandmodulteil dient der Anpassung der Höhe des Schachtes an die Höhe des Dachaufbaus, also beispielsweise die Höhe der auf dem Dach angeordneten Dachbegrünung oder Kiesschüttung. Auch die mehrstöckigen Schächte der Figuren 1(b) und 2 sind mit einem Deckel 22 verschlossen. Dieser Deckel kann abgenommen oder alternativ an Scharnieren aufgeklappt werden.

Als Materialien für den Schacht und den Deckel kommen Aluminium, Edelstahl oder geeignete Kunststoffe in Frage. Auch Kombinationen dieser Materialien sind denkbar.

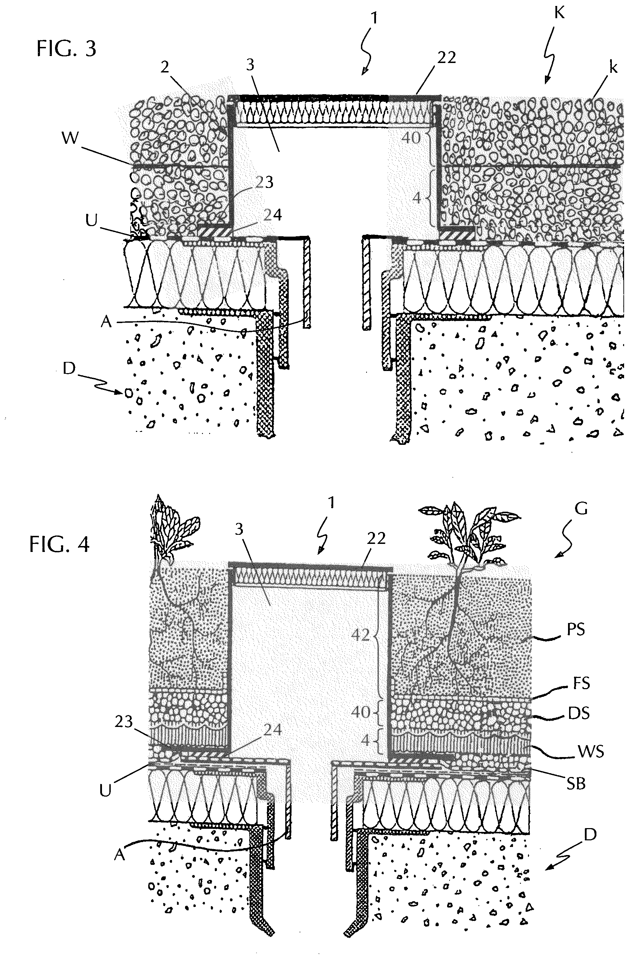

Figuren 3 und 4 zeigen Schächte 2 erfindungsgemäßer Wasserabflusssysteme 1 eingebaut auf einem Kiesdach und einem begrünten Dach. Im Falle des in Figur 3 dargestellten Kiesdaches K ist auf der Dachfläche U eine Kiesschüttung k aufgebracht. Der von der Kiesschüttung ungebende Schacht 2 entspricht in seiner Höhe der Höhe der Kiesschüttung k. Der Deckel 22 ist nicht mit Kies bedeckt und somit leicht abnehmbar, womit der Hohlraum 3 des Schachtes 2 zugänglich wird. Bei dem Schacht 2 handelt es sich um einen solchen, wie er in Figur 1 (b) dargestellt ist. Zwischen den Flanschen 23 und der Dachfläche U ist eine Dichtung 24, beispielsweise aus Kompriband, angeordnet, um den unteren Rand des Schachtes 2 gegen die Dachfläche U abzudichten und hier ein Eintreten von Wasser in das Innere des Schachtes zu verhindern. Auf der Dachfläche U stehendes Wasser W kann somit im Wesentlichen nur bei geöffneter Einlassöffnung in das Innere des Schachtes 2 eintreten, solange der Wasserstand nicht die Höhe der geschlossenen Seitenwandung 4 überschritten hat. In Figur 3 ist ein Fall dargestellt, in welchem der Wasserspiegel W knapp unterhalb der oberen Kante der Seitenwandung 4 steht und gerade noch nicht durch die Schlitze 41 des Seitenwandungsteils 40 in das Innere 3 des Schachtes 2 eintritt. Das Speichervolumen des Kiesdaches ist im gezeigten Fall also nahezu vollständig ausgeschöpft. Sollte es nun stärker anfangen zu regnen, würde der Wasserspiegel über die Oberkante des Seitenwandmoduls 4 hinaus ansteigen, so dass ohne Wasserstandsregulierung der Notablauf durch die Schlitze 41 in Anspruch genommen werden müsste und Wasser ungehindert durch den Abfluss A des Daches D in die Kanalisation gelangen würde. Das erfindungsgemäße Wasserabflusssystem ermöglicht diese gezielte Wasserregulierung, wie nachfolgend näher erläutert werden wird.

Zuvor soll jedoch noch der Aufbau eines Gründaches G beschrieben werden, wie es schematisch in Figur 4 dargestellt ist. Gezeigt ist erneut ein Querschnitt eines Daches D im Bereich eines Dachabflusses A. Zum Schutz der Dachoberfläche sind zunächst einige Schutzbeläge SB auf der Dachfläche U aufgebracht. Im Bereich des Abflusses A ist ein Schacht eines erfindungsgemäßen Wasserabflusssystems 1 aufgestellt, hier ein Schacht entsprechend der Figur 2. Die Flansche 23 sind erneut mit einer Dichtung 24 an die Dachfläche wasserdicht angeschlossen. Bei der Dachbegrünung handelt es sich um eine solche mit einem permanenten Wasserspeicher WS. Dies ist ein Hohlraum, der mit Wasser aufgefüllt werden kann und sich im Wesentlichen über die gesamte Dachfläche erstreckt. Dieser Hohlraum wird durch palettenähnliche Kunststoff-Hohlbauteile definiert, die in an sich bekannter Weise großflächig auf der Dachfläche ausgelegt werden. Oberhalb dieser Hohlraum-Bauteile ist eine Dränschicht DS aufgebracht, die von einer Filterschicht FS abgedeckt ist, welche das Eindringen von Pflanzsubstrat PS in Dränschicht und Wasserspeicher verhindern soll. In das Pflanzsubstrat sind Stauden und Sträucher eingepflanzt. Das Wasser, das zu ihrer Versorgung dient, wird mittels Kapillarkräften durch die Dränschicht hindurch aus dem Wasserspeicher nach oben gesaugt und von den Wurzeln der Pflanzen aufgenommen. Der Wandaufbau des Schachtes 2 ist so, dass die untere Seitenwandung 4 von ihrer Höhe im Wesentlichen der Höhe des Wasserspeichers WS entspricht. Die Höhe des wasserdurchlässigen Wandmodulteils 40 entspricht im Wesentlichen der Höhe der Dränschicht DS. Die obere geschlossene Wandung 42 grenzt an das Pflanzsubstrat PS. Dieser Aufbau stellt sicher, dass sich Wasser in Höhe des Wasserspeichers WS anstauen kann, ein darüber hinausgehender, nicht erwünschter Anstieg der Wassermenge in der Dachbegrünung jedoch über die Dränschicht DS und den Notablauf des geschlitzten Seitenwandmoduls 40 abfließen kann. Der geschlossene Wandmodulteil 42 verhindert das Eindringen von Pflanzsubstrat in den Schacht 2.

Für eine ausreichende Versorgung der Bepflanzung der Dachbegrünung ist es einerseits erforderlich, dass der Wasserspeicher WS immer ausreichend mit Wasser gefüllt ist, andererseits aber keine Staunässe entsteht, was durch Abführen überschüssigen Wassers durch die Dränschicht DS und den Notablauf des geschlitzten Wandmoduls 40 sichergestellt ist. Dieser Notablauf funktioniert immer, unabhängig von einer bestimmten Steuerung des Wasserhaushalts auf der Dachfläche. Darüber hinaus erlaubt es das erfindungsgemäße Wasserabflusssystem 1 jedoch, den Wasserhaushalt so vorausschauend zu regulieren, dass der Notablauf nur noch in den seltensten Fällen zum Einsatz kommen muss. Das erfindungsgemäße Wasserabflusssystem erlaubt es zum Beispiel, Wasser im voraus aus dem Wasserspeicher und von der Dachfläche U abzulassen, wenn starke Niederschläge zu erwarten sind, die die Speicherkapazität eines bereits zumindest teilweise gefüllten Wasserspeichers überschreiten würden. Dies soll nachfolgend anhand der Figuren 6 bis 8 näher erläutert werden.

Wie bereits erwähnt, besitzen alle Wasserabflusssysteme der Erfindung wenigstens einen Einlass 5, der sich im Bereich der unteren Seitenwandung 4 befindet. Konkret ist der Einlass 5 hier unmittelbar oberhalb der Dachfläche U in der Seitenwandung 4 angeordnet, wie dies beispielsweise in Figur 1(b) zu erkennen ist. Die untere Kante des Eingangs 5 befindet sich nur um die Dicke des Flansches 23 oberhalb der Dachfläche U. In den gezeigten Fällen ist der Eingang 5 schleusenartig ausgebildet, was sich insbesondere Figur 6 entnehmen lässt, die eine Teildraufsicht auf einen Schacht 2 eines erfindungsgemäßen Wasserabflusssystems 1 zeigt. Die Schleuse 51 des Eingangs 5 steht auf einer rechteckigen Bodenplatte, die eine Verlängerung des Flansches 23 in das Innere 3 des Schachtes 2 ist. Die Schleuse 51 wird von zwei parallelen Seitenwänden 53 und einer stirnseitigen Endwand 52 eingefasst, die jeweils die Höhe der Seitenwandung 4 aufweisen. Kurz hinter der Öffnung in der Seitenwandung 4 ist eine gelochte Platte 54 eingeschoben, welche die Schleuse quer in zwei Teile teilt und als Grobpartikelfilter dient, um ein Eindringen von groben Schmutzteilchen in das Innere 3 des Schachtes zu verhindern. Wasser, welches durch den Eingang 5 eintritt und den Filter 54 passiert hat, muss durch zwei Einlassöffnungen 50 und 50' hindurchtreten, bevor es endgültig in den Hohlraum 3 des Schachtes 2 gelangt und von dort durch den hinter der Einlassöffnung 50' liegenden Abfluss A des Daches D von diesem abgeleitet werden kann.

Die Einlassöffnungen 50 und 50' sind in gegenüberliegenden Wandungen eines Hohlzylinders 55 ausgebildet. Dabei ist zwischen der Unterkante des Hohlzylinders 55 und der Einlassöffnung 50 ein stegartiger Bereich 56 belassen worden, während die innere Einlassöffnung 50' die untere Kante des Hohlzylinders durchschneidet und damit unmittelbar an die Dachfläche U angrenzt. Die Geschwindigkeit, mit welcher Wasser durch den Einlass 5 hindurch in den Hohlraum 3 und von dort in den Abfluss A gelangen kann, wird durch den Öffnungsquerschnitt der Einlassöffnungen 50 oder 50' bestimmt, konkret durch den Öffnungsquerschnitt der kleineren der beiden Öffnungen. Welche der beiden Öffnungen die geschwindigkeitsbestimmende ist, ist prinzipiell gleichgültig. Das maximale Volumen, das pro Zeiteinheit von der Dachfläche U durch den Abfluss A ablaufen kann, wird also durch die Fläche der kleineren der beiden Einlassöffnungen 50 und 50' bestimmt. Anstelle des hier gezeigten Hohlzylinders könnte auch das aus der DE 198 52 561 C1 bekannte System aus zwei konzentrischen Rohren verwendet werden.

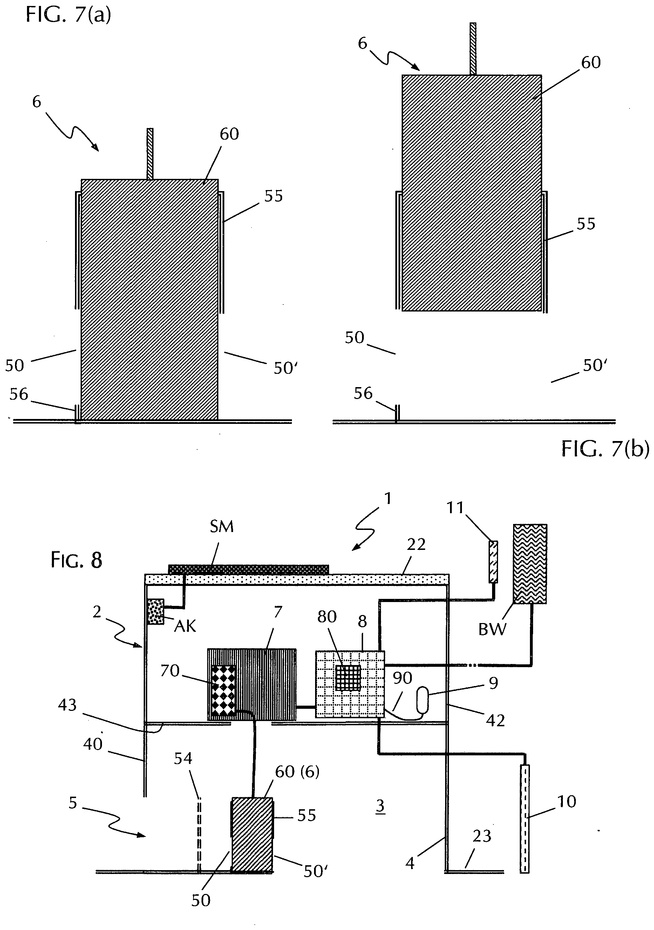

Ob überhaupt Wasser durch die Öffnungen 50 und 50' hindurchtreten kann, wird wiederum durch die Stellung des Verschlusses 6 vorgegeben, welcher die Einlassöffnungen 50, 50' verschließt oder freigibt. Das Prinzip ist in Figuren 7(a) und 7(b) verdeutlicht. Bei dem Verschluss 6 handelt es sich im gezeigten Fall um einen Kolben 60, der mittels der Betätigungsvorrichtung des erfindungsgemäßen Wasserabflusssystems 1 im Hohlzylinder 55 nach oben oder nach unten bewegt werden kann. Figur 7(a) zeigt den Kolben 60 in seiner vollständig abgesenkten Form, bei der die Einlassöffnungen 50 und 50' vollständig verschlossen sind. Der Steg 56 sorgt dafür, dass auch im unteren, der Dachfläche U benachbarten Bereich eine ausreichende Dichtigkeit erreicht wird. Figur 7(b) zeigt den Kolben 60 in angehobener Position, bei der beide Einlassöffnungen 50 und 50' vollständig freigegeben sind. In dieser Position wird also das maximale Ablaufvolumen pro Zeit erreicht. Mittlere Positionen zwischen den in Figuren 7(a) und 7(b) gezeigten erlauben es, gezielt Ablaufvolumina einzustellen, die geringer sind als das maximal mögliche Ablaufvolumen pro Zeit. Es ist also eine sehr genaue Regulierung des Wasserhaushalts entsprechend den jeweiligen Erfordernissen möglich. Das insgesamt abgelassene Volumen errechnet sich aus der Größe der freigegebenen Einlassöffnung und der Zeit, über die Wasser ablaufen gelassen wird. Die Regulierung des Wasserhaushalts auf dem Dach kann entweder manuell oder automatisch erfolgen, wie nachfolgend unter Bezugnahme auf Figur 8 erläutert werden soll.

Figur 8 zeigt schematisch im Querschnitt ein erfindungsgemäßes Wasserabflusssystem 1 am Beispiel eines dreistöckigen Schachtes 2, wie er in Figur 2 in Außenansicht dargestellt ist. Über der zweiten Etage 40 des Schachtes ist hier ein Zwischenboden 43 eingezogen, auf dem die Betätigungsvorrichtung 7 angeordnet ist, welche den Verschluss 6 (den Kolben 60) zum Öffnen oder Schließen der Einlassöffnungen 50 und 50' nach oben oder unten bewegt. Zu diesem Zweck wird hier eine pneumatische Betätigungsvorrichtung verwendet, bei der ein Kompressor 70 über einen Druckschlauch mit dem Kolben 60 verbunden ist. Die Steuerung der Betätigungsvorrichtung 7 erfolgt mittels einer Steuervorrichtung 8. Die Steuervorrichtung 8 kann entweder mittels eines hier nicht dargestellten Bedienelementes wie beispielsweise einer Tastatur oder eines Touchscreens bedient werden, um der Betätigungsvorrichtung 7 manuell Befehlte zukommen zu lassen und/oder Informationen abzufragen usw. Die hierfür erforderlichen Programme, Daten usw. sind in einem Speicher 80 der Steuerungseinheit hinterlegt.

Ein besonderer Vorteil des erfindungsgemäßen Wasserabflusssystems besteht darin, dass es auch von einem entfernt gelegenen Standort aus bedient werden kann. Dies ermöglicht ein Mobiltelefon/Smartphone 9, welches sowohl als Empfangsgerät als auch als Sender des Wasserabflusssystems fungiert und mittels eines Datenkabels mit der Steuervorrichtung 8 verbunden ist. Durch Anwählen des Mobiltelefons 9 ist es möglich, mit der Steuervorrichtung 8 in Kontakt zu treten und an diese Befehle zu übermitteln oder Daten und/oder Meldungen auszulesen. Auf diese Weise ist es beispielsweise möglich, dass von der Steuervorrichtung 8 ausgegebene Fehlermeldungen über das Mobiltelefon 9 an ein Mobiltelefon oder einen sonstigen Empfänger eines Benutzers übermittelt werden, so dass dieser oder ein Servicedienstleister auf die Fehlermeldung reagieren können. Die Reparatur kann dann wiederum per Fernwartung über das Mobiltelefon 9 an die Steuerungseinrichtung 8 erfolgen, so dass nur noch in den seltensten Fällen ein Servicetechniker vor Ort eine Reparatur oder Wartungsarbeiten vornehmen muss. Die beschriebene Ausgestaltung des Wasserabflusssystems 1 ermöglicht es zudem speziell auch, über die Steuervorrichtung 8 die Betätigungsvorrichtung 7 anzusteuern und so per manueller Einflussnahme den Verschluss 6 zu öffnen oder zu schließen und so von einem anderen Standort aus den Wasserhaushalt auf dem Dach zu regulieren.

Von besonderem Vorteil ist es jedoch, wenn auf dem Mobiltelefon eine Wetter-App installiert ist, mit welcher für den Standort spezifische Wetterdaten auf das Mobiltelefon 9 übertragen werden können. Diese mittels des Mobiltelefons 9 empfangenen Wetterdaten werden dann über das Datenkabel 90 an die Steuervorrichtung 8 übertragen und dort ausgewertet. Für die Auswertung werden in dem Speicher 80 hinterlegte Niederschlagswerte mit den von der Wetter-App übermittelten Niederschlagswerten verglichen. Den hinterlegten Niederschlagswerten sind entsprechende Gesamtvolumina zugeordnet, die bei der erwarteten Niederschlagsmenge pro Zeit entsprechend der Einzugsfläche des Daches im Wasserspeicher des Daches aufgenommen werden müssen. Zum Beispiel ist einer prognostizierten Niederschlagsmenge von x Litern pro Quadratmeter über den Prognose-Zeitraum ein aufzunehmendes Wasservolumen von y Litern in diesem Zeitraum zugeordnet. Diese hinterlegten Werte werden in an sich bekannter Weise spezifisch für den Dachaufbau vorab ermittelt und abgespeichert. Weiter im Speicher hinterlegte Werte können unter anderem die für den Dachaufbau spezifische Retentionsfläche, das maximale Anstauvolumen, spezifische Verdunstungswerte, das maximale Ablaufvolumen pro Zeit, die vorgegebenen Retentionswerte, wie beispielsweise die zulässige Abflussspende, der vorgegebene Abflussbeiwert, die vorgegebenen Rückhaltezeit etc., gegebenenfalls baustatische Werte oder sonstige für den Wasserhaushalt erforderliche Daten beinhalten.

Weiterhin ist es möglich, im Bereich des Wasserspeichers einen Wasserstandsanzeiger 10 anzubringen, der ebenfalls Werte an den Speicher 80 der Steuervorrichtung 8 übermittelt. Aus diesen hinterlegten Werten lassen sich durch Vergleich mit den von der Wetter-App gelieferten zu erwartenden Niederschlagswerten die Parameter errechnen, die für einen optimalen Wasserhaushalt in der Dachbegrünung erforderlich sind. Konkret werden durch Vergleich dieser Werte Parameter ermittelt, mit denen durch gezieltes Öffnen oder Schließen des Verschlusses 6 soviel Wasser im Wasserspeicher angestaut oder aus diesem abgelassen wird, dass einerseits stets eine ausreichende Menge zur Versorgung der Bepflanzung vorhanden ist und andererseits, falls starke Niederschläge erwartet werden, soviel Speicherplatz im Wasserspeicher freigemacht wird, dass der dann niedergehende Regen im Wasserspeicher aufgenommen werden kann, ohne dass es zu einem Überfließen in den Notablauf kommt.

Übermittelt zum Beispiel das Mobiltelefon 9 Daten der Wetter-App, die für die Folgewoche trockene Tage vorhersagt, veranlasst die Steuervorrichtung 8 nach Vergleich der Daten mit den hinterlegten Werten und Szenarien die Betätigungsvorrichtung 7, den Verschluss 6 zu schließen, konkret den Kolben 60 abzusenken, um den für die aktuelle Woche prognostizierten Regen im Wasserspeicher WS aufzufangen. Der gespeicherte Niederschlag steht dann während der Trockenperiode den Pflanzen zur Verfügung. Temperaturwerte, die von einem mit der Steuervorrichtung 8 verbundenen Temperaturfühler 11 geliefert werden, können dazu dienen, den Wasserverlust durch Verdunstung sowie einen eventuell erhöhten Wasserbedarf der Bepflanzung bei hohen Temperaturen bei der Berechnung der nötigen Wassermengen mit zu berücksichtigen.

Meldet der Wasserstandsanzeiger 10 im Verlauf der Trockenperiode einen unter einen vorgegebenen Wert gesunkenen Wasserspiegel und lassen die Prognosedaten kein unmittelbar bevorstehendes Ende der Trockenperiode erwarten, veranlasst die Steuervorrichtung 8 eine auf dem Dach installierte Bewässerungsvorrichtung BW, dem Dach Wasser zuzuführen. Dies kann entweder für einen vorgegebenen Zeitraum erfolgen oder bis der Wasserspeicher wieder auf den vorgegebenen Mindestwert aufgefüllt ist.

Prognostiziert die Wetter-App dagegen heftige Niederschläge für die kommenden Tage und ergibt die Auswertung in der Steuervorrichtung 8, dass der Wasserspeicher bereits soweit gefüllt ist, dass diese Niederschlagsmengen nicht mehr aufgenommen werden können, wird die Betätigungsvorrichtung rechtzeitig vor Beginn der Niederschläge veranlasst, den Verschluss 6 solange und soweit zu öffnen, dass eine Wassermenge vom Dach abläuft, die dem erwarteten Niederschlag zumindest entspricht.

Zur Versorgung der stromverbrauchenden Komponenten mit Strom ist auf dem Deckel 22 ein Solarmodul SM angeordnet, dem ein Stromspeicher in Form eines Akkus AK zugeordnet ist. Die Verbindung zwischen Akku und Verbrauchern ist der Übersichtlichkeit halber hier nicht gezeigt.

## Patentansprüche

1. Wasserabflusssystem (1), umfassend einen auf einer einen Abfluss (A) aufweisenden Wasseraufstandsfläche (U) in Form einer Dachfläche aufstellbaren Schacht (2) mit einer einen Hohlraum (3) wasserdicht umgebenden Seitenwandung (4), welche wenigstens einen Einlass (5) mit wenigstens einer Einlassöffnung (50) aufweist, durch die Wasser in den Hohlraum (3) eintreten kann, wobei der Schacht (2) so auf der Dachfläche platziert ist, dass der Hohlraum (3) über dem Abfluss (A) zu liegen kommt, und wobei wenigstens ein Verschluss (6) zum wasserdichten Verschließen der wenigstens einen Einlassöffnung (50) vorgesehen ist, **dadurch gekennzeichnet, dass**
eine Betätigungsvorrichtung (7) zum Bewegen des wenigstens einen Verschlusses (6) für das Einstellen der Öffnungsgröße der wenigstens einen Einlassöffnung (50) sowie eine Steuervorrichtung (8) zum Steuern der Betätigungsvorrichtung (7) vorgesehen sind.

2. Wasserabflusssystem nach Anspruch 1, worin die Steuervorrichtung (8) ausgebildet ist, die Betätigungsvorrichtung (7) in Abhängigkeit von extern empfangenen Wetterdaten, insbesondere Wetterprognosedaten und bevorzugt prognostizierten Niederschlagsmengen, zu steuern.

3. Wasserabflusssystem nach Anspruch 2, worin ein Empfangsgerät (9), bevorzugt ein Mobilfunkgerät und insbesondere ein Smartphone, zum Empfang der Wetterdaten vorgesehen ist, welches mit der Steuervorrichtung (8) zum Zweck der Übertragung der empfangenen Wetterdaten verbunden ist.

4. Wasserabflusssystem nach einem der Ansprüche 1 bis 3, worin ein mit der Steuervorrichtung (8) verbundener Sender zum Übertragen von Meldungen und/oder Daten an einen externen Empfänger vorgesehen ist und worin insbesondere das Mobilfunkgerät als Sender dient.

5. Wasserabflusssystem nach einem der Ansprüche 1 bis 4, worin der wenigstens eine Einlass (5) in einem der Wasseraufstandsfläche (U) benachbarten Bereich der Seitenwandung (4) angeordnet ist und insbesondere in Form einer sich in den Hohlraum (3) erstreckenden Schleuse (51) ausgebildet ist, wobei sich die wenigstens eine Einlassöffnung (50) bevorzugt am inneren stirnseitigen Ende (52) der Schleusenwand (53) befindet.

6. Wasserabflusssystem nach Anspruch 5, worin im Bereich vor der wenigstens einen Einlassöffnung (50) ein Partikelfilter, bevorzugt in Form eines Gitters oder Siebes, vorgesehen ist.

7. Wasserabflusssystem nach einem der Ansprüche 1 bis 6, worin der Einlass (5) einen aufrecht stehenden Hohlzylinder (55) aufweist, der in gegenüberliegenden Seiten seiner Wandung je wenigstens eine Einlassöffnung (50, 50') besitzt, und zum Öffnen und Schließen der Einlassöffnungen (50, 50') ein in die Innenöffnung des Hohlzylinders (55) eingepasster und mittels der Betätigungsvorrichtung (7) in dieser auf und ab bewegbarer Kolben (60) vorgesehen ist.

8. Wasserabflusssystem nach einem der Ansprüche 1 bis 7, worin die Betätigungsvorrichtung (7) ein Elektromotor oder ein elektromagnetischer, hydraulischer oder pneumatischer Antrieb ist.

9. Wasserabflusssystem nach einem der Ansprüche 1 bis 8, worin auf der Seitenwandung (4) ein zweiter Seitenwandabschnitt (40) mit wenigstens einer Durchflussöffnung (41) als Notablauf vorgesehen ist.

10. Wasserabflusssystem nach einem der Ansprüche 1 bis 9, worin der Schacht (2) auf der der Wasseraufstandsfläche (U) abgewandten Seite eine Wartungsöffnung (20) aufweist, welche bevorzugt mit einem Deckel (22) verschließbar ist.

11. Wasserabflusssystem nach einem der Ansprüche 1 bis 10, umfassend wenigstens ein Solarmodul (SM) zur Versorgung wenigstens einer der folgenden Vorrichtungen mit Strom:
- der Betätigungsvorrichtung (7),
- der Steuervorrichtung (8),
- des Empfangsgeräts (9),
- des Senders.

12. Kies- oder Gründach, umfassend ein Wasserabflusssystem nach einem der Ansprüche 1 bis 11.

13. Verfahren zum Regulieren des Wasserstandes auf einem Kies- oder Gründach, welches ein Wasserabflusssystem nach einem der Ansprüche 2 bis 11 aufweist, umfassend die Schritte:
- Empfangen von Wetterdaten mittels des Empfangsgeräts (9),
- Übermitteln der Wetterdaten vom Empfangsgerät (9) an die Steuervorrichtung (8),
- Vergleichen der Wetterdaten mit in einem Speicher der Steuervorrichtung (8) abgespeicherten Referenzwerten,
- Auswahl von Steuerparametern entsprechend den ermittelten Referenzwerten und Übermittlung der Steuerparameter an die Betätigungsvorrichtung (7),
- Einstellen der Öffnungsgröße der wenigstens einen Einlassöffnung (50, 50') durch Bewegen des wenigstens einen Verschlusses (6) mittels der Betätigungsvorrichtung (7).

## Claims

1. A water drain system (1), comprising a duct (2) which can be set up on a water sub-surface (U) in the form of a roof surface and having a drain (A), the duct having a lateral wall (4) surrounding a cavity (3) in a waterproof manner, which comprises at least one inlet (5) with at least one inlet opening (50) through which water can get into the cavity (3), the duct (2) being positioned on the roof surface in such a way that the cavity (3) comes to rest above the drain (A), and at least one closure (6) being provided for the watertight sealing of the at least one inlet opening (50),
**characterized in that**
an actuating device (7) for moving the at least one closure (6) for the adjustment of the opening size of the at least one inlet opening (50), as well as a control device (8) for controlling the actuating device (7) are provided.

2. The water drain system according to claim 1, wherein the control device (8) is configured to control the actuating device (7) depending on externally-received weather data, in particular weather forecast data, and preferably forecast amounts of precipitation.

3. The water drain system according to claim 2, wherein a receiving apparatus (9), preferably a mobile communication device, and in particular a smartphone, is provided for receiving the weather data, the receiving apparatus being connected with the control device (8) for the purpose of transmitting the received weather data.

4. The water drain system according to any one of claims 1 to 3, wherein a transmitter connected to the control device (8) is provided for transmitting messages and/or data to an external receiver, and wherein in particular the mobile communication device serves as a transmitter.

5. The water drain system according to any one of claims 1 to 4, wherein the at least one inlet (5) is arranged in an area of the lateral wall (4) adjacent to the water sub-surface (U), and in particular is configured in the form of a sluice (51) extending into the cavity (3), wherein the at least one inlet opening (50) is preferably located on the inner front-facing end (52) of the sluice wall (53).

6. The water drain system according to claim 5, wherein a particle filter, preferably in the form of a grid or a screen, is provided in the area located in front of the at least one inlet opening (50).

7. The water drain system according to any one of claims 1 to 6, wherein the inlet (5) comprises an upright hollow cylinder (55), which has at least one inlet opening (50, 50') on opposite sides of its wall, and a piston (60) fitted in the interior opening of the hollow cylinder (55), the piston being moveable in a vertical direction therein by means of the actuating device (7), is provided for the opening and closing of the inlet openings (50, 50').

8. The water drain system according to any one of claims 1 to 7, wherein the actuating device (7) is an electric motor, or an electromagnetic, hydraulic, or pneumatic drive.

9. The water drain system according to any one of claims 1 to 8, wherein a second side wall portion (40) with at least one passage opening (41) is provided as an emergency drain on the lateral wall (4).

10. The water drain system according to any one of claims 1 to 9, wherein the duct (2) has a maintenance opening (20) on the side facing away from the water sub-surface (U), which is preferably closeable with a lid (22).

11. The water drain system according to any one of claims 1 to 10, comprising at least one solar module (SM) for the power supply of at least one of the following devices:
- the actuating device (7),
- the control device (8),
- the receiving apparatus (9),
- the transmitter.

12. A pebble roof or a green roof, comprising a water drain system according to any one of claims 1 to 11.

13. A method for regulating the water level on a pebble roof or a green roof, which has a water drain system according to any one of claims 2 to 11, comprising the steps of:
- receiving weather data by means of the receiving apparatus (9),
- transmitting the weather data from the receiving apparatus (9) to the control device (8),
- comparing the weather data to reference values stored in a memory of the control device (8),
- selecting control parameters according to the determined reference values and transmitting the control parameters to the actuating device (7),
- setting the opening size of the at least one inlet opening (50, 50') by moving the at least one closure (6) by means of the actuating device (7).

## Revendications

1. Système (1) d'évacuation des eaux, comprenant une canalisation (2) qui peut être mise en place sur une surface de contact (U) de l'eau prenant la forme d'une surface de toiture et ayant une évacuation (A), la canalisation ayant une paroi latérale (4) entourant une cavité (3) d'une manière étanche à l'eau, qui comprend au moins une entrée (5) avec au moins une ouverture (50) d'entrée par laquelle l'eau peut pénétrer dans la cavité (3), la canalisation (2) étant positionnée sur la surface de la toiture d'une façon telle que la cavité (3) vienne se placer au-dessus de l'évacuation (A), et au moins un dispositif de fermeture (6) étant prévu pour la fermeture étanche à l'eau de ladite au moins une ouverture (50) d'entrée,
**caractérisé en ce que**
un dispositif d'actionnement (7) pour déplacer ledit au moins un dispositif de fermeture (6) pour le réglage de la taille d'ouverture de ladite au moins une ouverture (50) d'entrée, ainsi qu'un dispositif de commande (8) pour commander le dispositif d'actionnement (7), sont prévus.

2. Système d'évacuation des eaux selon la revendication 1, dans lequel le dispositif de commande (8) est configuré pour commander le dispositif d'actionnement (7) en fonction de données météo reçues de manière extérieure, en particulier de données de prévisions météorologiques, et de manière préférée des données sur des prévisions de hauteurs de précipitations.

3. Système d'évacuation des eaux selon la revendication 2, dans lequel un appareil récepteur (9), de manière préférée un dispositif de communication mobile, et en particulier un "smartphone" (téléphone intelligent), est prévu pour recevoir les données météo, l'appareil récepteur étant connecté au dispositif de commande (8) à des fins de transmission des données météo reçues.

4. Système d'évacuation des eaux selon l'une quelconque des revendications 1 à 3, dans lequel un émetteur connecté au dispositif de commande (8) est prévu pour transmettre des messages et/ou des données à un récepteur externe, et dans lequel en particulier le dispositif de communication mobile sert d'émetteur.

5. Système d'évacuation des eaux selon l'une quelconque des revendications 1 à 4, dans lequel ladite au moins une entrée (5) est située dans une zone de la paroi latérale (4) adjacente à la surface de contact (U) de l'eau, et en particulier est configurée sous la forme d'une vanne (51) s'étendant dans la cavité (3), dans lequel ladite au moins une ouverture (50) d'entrée est, de manière préférée, située sur l'extrémité (52) de la face frontale interne de la paroi (53) de la vanne.

6. Système d'évacuation des eaux selon la revendication 5, dans lequel un filtre à particules, de manière préférée sous forme d'une grille ou d'un tamis, est prévu dans la zone située en face de ladite au moins une ouverture (50) d'entrée.

7. Système d'évacuation des eaux selon l'une quelconque des revendications 1 à 6, dans lequel l'entrée (5) comprend un cylindre creux vertical (55), qui présente au moins une ouverture d'entrée (50, 50') sur des côtés opposés de sa paroi, et un piston (60) inséré dans l'ouverture intérieure du cylindre creux (55), le piston étant mobile dans celui-ci dans une direction verticale grâce au dispositif d'actionnement (7), le piston étant prévu pour l'ouverture et la fermeture des ouvertures (50, 50') d'entrée.

8. Système d'évacuation des eaux selon l'une quelconque des revendications 1 à 7, dans lequel le dispositif d'actionnement (7) est un moteur électrique, ou un actionneur électromagnétique, hydraulique ou pneumatique.

9. Système d'évacuation des eaux selon l'une quelconque des revendications 1 à 8, dans lequel une seconde portion (40) de paroi latérale avec au moins une ouverture (41) de passage est prévue sur la paroi latérale (4) en tant que déversoir d'urgence.

10. Système d'évacuation des eaux selon l'une quelconque des revendications 1 à 9, dans lequel la canalisation (2) possède une ouverture (20) de maintenance sur la face opposée à la surface (U) de contact de l'eau, qui est, de manière préférée, refermable avec un couvercle (22).

11. Système d'évacuation des eaux selon l'une quelconque des revendications 1 à 10, comprenant au moins un module solaire (SM) pour l'alimentation électrique d'au moins l'un des dispositifs suivants :
- le dispositif d'actionnement (7),
- le dispositif de commande (8),
- l'appareil récepteur (9),
- l'émetteur.

12. Toit couvert de gravier ou toit végétalisé, comprenant un système d'évacuation des eaux selon l'une quelconque des revendications 1 à 11.

13. Procédé de régulation du niveau d'eau sur un toit couvert de gravier ou un toit végétalisé, qui possède un système d'évacuation des eaux selon l'une quelconque des revendications 2 à 11, comprenant les étapes de :
- réception de données météo au moyen de l'appareil récepteur (9),
- transmission des données météo de l'appareil récepteur (9) au dispositif de commande (8),
- comparaison des données météo avec des valeurs de référence stockées dans une mémoire du dispositif de commande (8),
- sélection des paramètres de commande en fonction des valeurs de référence déterminées et transmission des paramètres de contrôle au dispositif d'actionnement (7),
- réglage de la taille d'ouverture de ladite au moins une ouverture d'entrée (50, 50') par déplacement dudit au moins un dispositif de fermeture (6) au moyen du dispositif d'actionnement (7).
